# EUROPEAN PATENT APPLICATION

(11) **EP 0 859 210 A1**
(43) Date of publication of application: **19.08.1998**
(21) Application number: 98200766.8
(22) Date of filing: 25.05.1995
(51) Int. Cl.: F28D 1/053

(54) **Heat exchangers**

(30) Priority: 01.06.1994 GB 9410928; 16.01.1995 GB 9500778
(62) Divisional of application: 95303625.8
(71) Applicant: Caradon Ideal Limited, Kingston Upon Hull HU5 4JN (GB)
(72) Inventor: Bratley, Roy, Hessle, Hull HU13 QHP (GB)
(74) Representative: Lerwill, John

(57) **Abstract**

A heat exchanger for a condensing boiler has several upright tubes (1) disposed around a central combustion chamber in which a burner (10) is disposed, the tubes extending between upper and lower headers (4,5) for conducting water to and from the tubes. The tubes are fitted with fins which are provided with means, such as rods (12), wicks (13) and/or downwardly deflected tabs (15;16;115;145) defining drainage paths for condensate formed on the fins. The upper surface of the lower header (5) is arranged to collect the condensate and direct it to drainage holes formed in the header and through which the condensate passes into a collection chamber defined below the header by a sump (25). The sump chamber is connected by an overflow channel (32) to an overflow chamber (30) defined around the burner by a burner mounting plate (28) and the lower header (5), and a flame detector (31) which projects up through the overflow chamber is adapted to detect condensate in the overflow chamber.

## Description

This invention relates to heat exchangers and is mainly concerned with heat exchangers for gas boilers, especially so-called condensing boilers.

Known in the prior art are gas boilers having a cylindrical burner surrounded by an annular heat exchanger enclosing a combustion chamber in which the burner is centrally located. The heat exchanger can comprise several conduits or tubes for conducting the water to be heated extending substantially parallel to the axis of the burner between headers or manifolds located at the opposite ends of the heat exchanger. The tubes are generally equipped with fins or the like to increase the surface area available for heat exchange with the hot flue gases flowing from the combustion chamber between the tubes.

In recent times condensing boilers which operate with greater efficiency by extracting more heat from the flue gases, in particular by lowering the temperature of the gases below their dew point, have become popular. However, with such boilers the condensation occurring within the heat exchanger calls for some means of draining the condensation away. Furthermore, a film of condensation forming on the surfaces of the heat exchanger can itself impede the heat exchange and thereby reduce the heat exchanger efficiency. The present invention addresses these issues and provides a heat exchanger of the above described form suitable for a condensing boiler.

In accordance with a first aspect the invention provides a heat exchanger comprising a plurality of generally parallel upright tubes, substantially horizontal fins attached to the tubes, and means connected to the fins and extending downwardly therefrom to define a predetermined drainage path for condensate formed on the fins.

The means providing for drainage from the fin surfaces and thereby discouraging creation of condensate films covering these surfaces may take various specific forms. According to one embodiment, rods extend through the fins in the general direction of the tubes for water to run down from the upper surfaces of the fins along these rods. In another embodiment, the fins have downwardly deflected tabs from which water may drip down, the tabs of adjacent fins being aligned, and possibly arranged to contact each other, to define a continuous drainage path. In another embodiment elongate wicks extend through the fins generally in the direction of the tubes and conduct water downwardly from the fin surface. Of course, if desired, any of these different drainage means can be combined in one and the same embodiment. Preferably, drainage means are located adjacent the outer edges of the fins, this being where the flue gases will be coolest and hence where condensation is most likely to occur, but it may be desirable to include further drainage means inwardly of the outer edges.

In accordance with a second aspect of the present invention there is provided a heat exchanger comprising several tubes extending between upper and lower headers enclosing chambers for conducting water to and from the tubes, wherein a sump chamber is defined below the lower header for collection of condensate, and the upper surface of the lower header is arranged to collect condensate and to deliver condensate into the sump chamber through a drain outlet. In an especially convenient construction the lower header is of substantially rectangular configuration, e.g. square, and has a drain outlet hole located in the region of one or more corners thereof. The lower header can be made as a metal casting and can be provided with a continuous peripheral rim on its upper side to avoid condensate flowing over the outer edge thereof. The condensate can be discharged from the sump by any convenient drainage system, such as a siphon system.

In accordance with a third aspect the present invention provides a heat exchanger comprising several tubes extending between upper and lower headers enclosing chambers for conducting water to and from the tubes, a sump chamber defined below the lower header for collection of condensate, an overflow channel from the sump leading to an overflow chamber, and a flame detector positioned to sense condensate in the overflow chamber in addition to sensing a burner flame.

If the drain from the sump should become blocked for any reason, causing build up of condensate in the sump and eventual overflow into the overflow chamber, the flame detector senses the presence of water in this latter chamber and provides a signal to which the boiler controls can react by shutting down the boiler. By using the flame detector to detect overflow of condensate, the construction and assembly of the boiler are simplified. Conveniently, the overflow chamber is defined by a base plate carrying the burner and the lower header. The overflow channel can be defined between the sump and lower header and be arranged to drain condensate from the overflow chamber back into the sump when the blockage has been cleared in the drain from the sump. The overflow channel is preferably of restricted through flow area to minimise the possible flow of hot flue gas out through the condensate drain via the sump, the overflow chamber being in free communication with the combustion chamber.

A clear understanding of the invention in its different aspects will be gained from the following more detailed description, reference being made to the accompanying drawings, in which:-
Figure 1 is a front elevation of a heat exchanger for a gas boiler, constructed in accordance with the invention;
Figure 2 is a side elevation of the heat exchanger shown with the gas burner assembled therewith;
Figure 3 is a horizontal cross section through the heat exchanger of Figure 2;
Figures 4A and 4B are side and plan views of one particular form of heat exchanger segment;
Figures 5A and 5B are side and plan views of the second form of heat exchanger segment;
Figures 6A and 6B are side and plan views of a third form of heat exchanger segment;
Figure 6C is a plan view showing a modified form of the fin plate of Fig. 6B;
Figure 6D is an enlarged plan view showing the region of one of the water tube holes in the fin plate of Fig. 6C;
Figure 6E is an enlarged plan view showing the configuration of one of the fin edge tabs of the fin plate of Fig. 6C;
Figure 6F is an enlarged partial cross-section showing the positioning of the additional tabs in relation to the water tubes in the assembled heat exchanger.
Figure 7 is an underneath plan view of the heat exchanger;

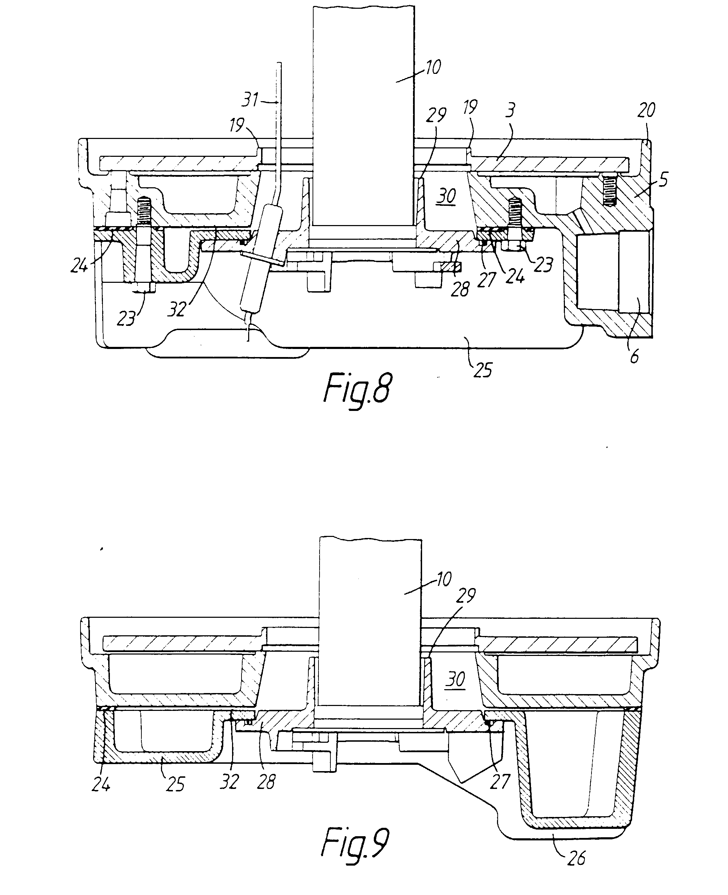

Figure 8 is a partial cross-section taken along the line VIII-VIII in Figure 7; and
Figure 9 is a partial cross-section taken along the line IX-IX of Figure 7.

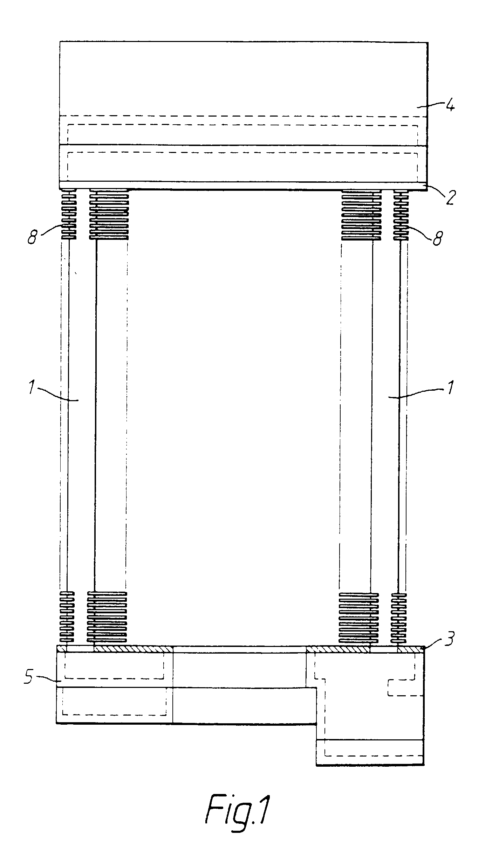

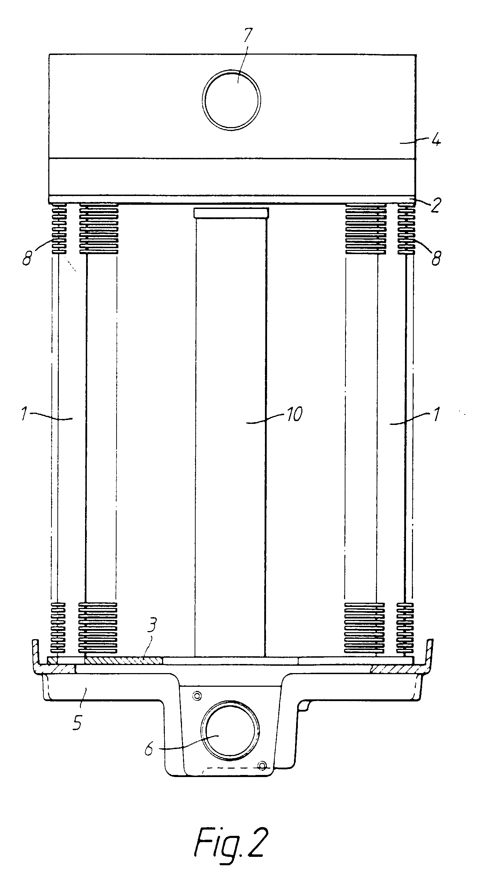

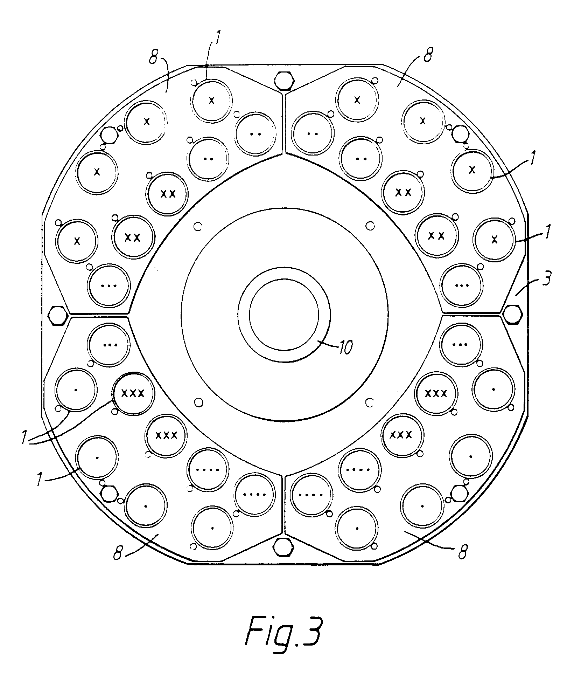

The heat exchanger and gas burner assembly illustrated in Figures 1 to 3 is suitable for a domestic gas boiler. The heat exchanger includes several parallel metal tubes 1 arranged in an annular array and fastened between upper and lower tube end plates 2,3. The tube end plates are respectively secured and sealed to upper and lower headers 4,5 to confine within the headers chambers for conducting water to and from the tubes as explained in more detail below. The lower header includes a water inlet 6 for entry of water to be heated into the heat exchanger, and the upper header includes a water outlet 7 for hot water having flowed through the heat exchanger and been heated. The tubes are fitted with fins 8 which in well known manner serve to increase the surface area for heat exchange with hot flue gases passing between the tubes 1. The fins are mounted over the full height of the tubes 1 and are only partially shown in Figures 1 and 2. For convenience the assembly of tubes, end plates and fins is manufactured as four equal segments. Each heat exchanger segment includes nine tubes with their axes disposed in two arcuate rows, as best seen in Figure 3, there being five tubes in the inner row and four tubes in the outer row. Each fin plate in each segment surrounds all the tubes of this segment, these fin plates being substantially horizontal in the assembled heat exchanger. The fin plates may be fitted frictionally to the tubes or may be fixed thereon such as by soldering. The upper and lower headers are shaped to form chambers communicating with the tube ends to provide a predetermined flow path for water through the the heat exchanger. In particular, the incoming cold water first flows upwardly through the four outer tubes (.) of each of the two lower segments as viewed in Figure 3, it is then transferred by the upper header and flows downwardly through the four outer tubes (x) of each of the two upper segments of Figure 3. Upon reaching the lower header again the water is transferred to flow upwardly through the neighbouring adjacent two of the inner tubes (..) of the two upper segments in Figure 3, following which the water is transferred by the upper header to flow downwardly through the next adjacent pairs of inner tubes (xx) of the two upper segments. The water is then directed by the lower header to flow upwardly through the adjacent inner tubes (...) of the upper and lower segments as viewed in Figure 3, and is subsequently directed to flow downwardly through intermediate adjacent tubes (xxx) of each lower segment, and finally is directed by the lower header to pass upwardly through the neighbouring adjacent pairs of inner tubes (....) of the two lower segments, whereafter the water passes out through the outlet of the upper header. Thus it will be appreciated that each drop of water is constrained to make seven passes along the heat exchanger tubes in flowing from the inlet 6 to the outlet 7. Of course a greater or smaller number of tubes could be used with the chambers in the headers arranged accordingly, and if desired the water may be constrained to make more or less than seven passes along the tubes in flowing through the heat exchanger.

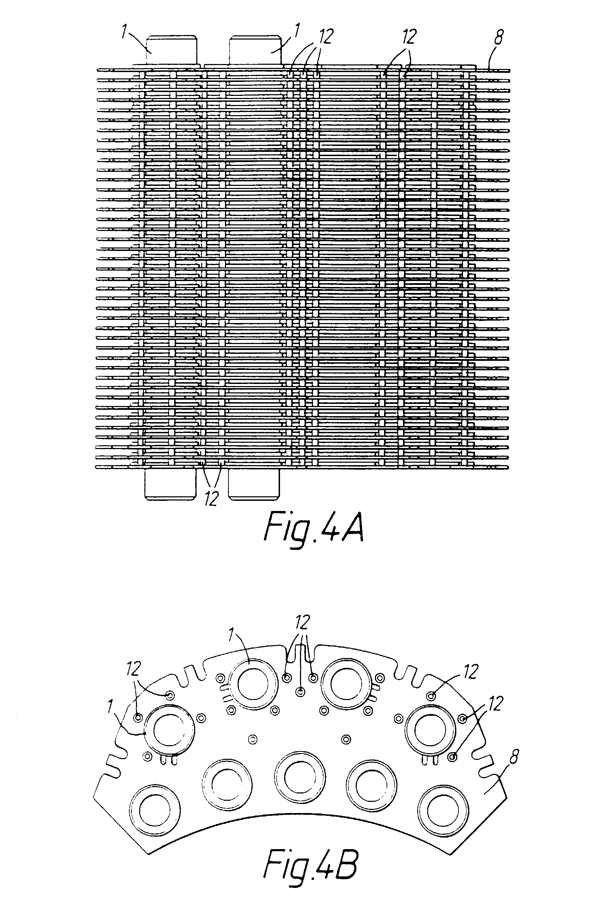

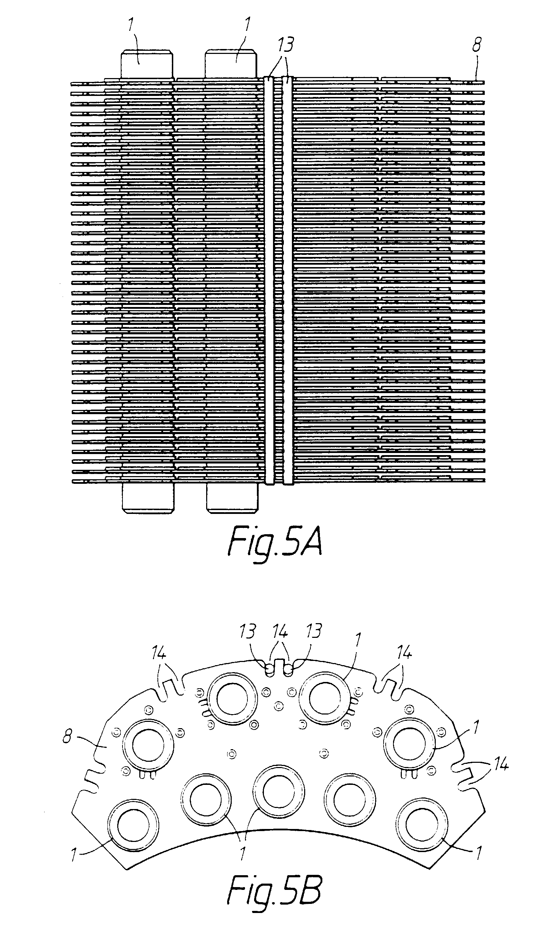

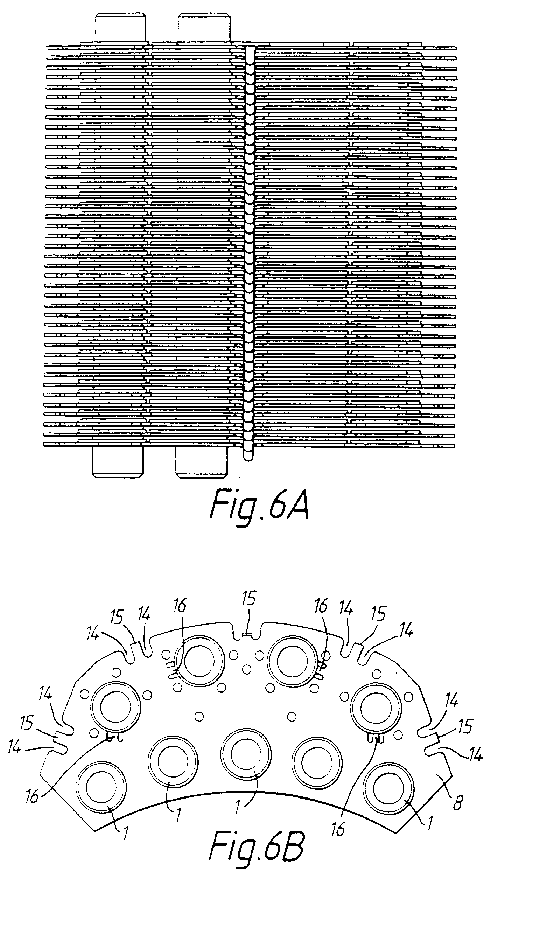

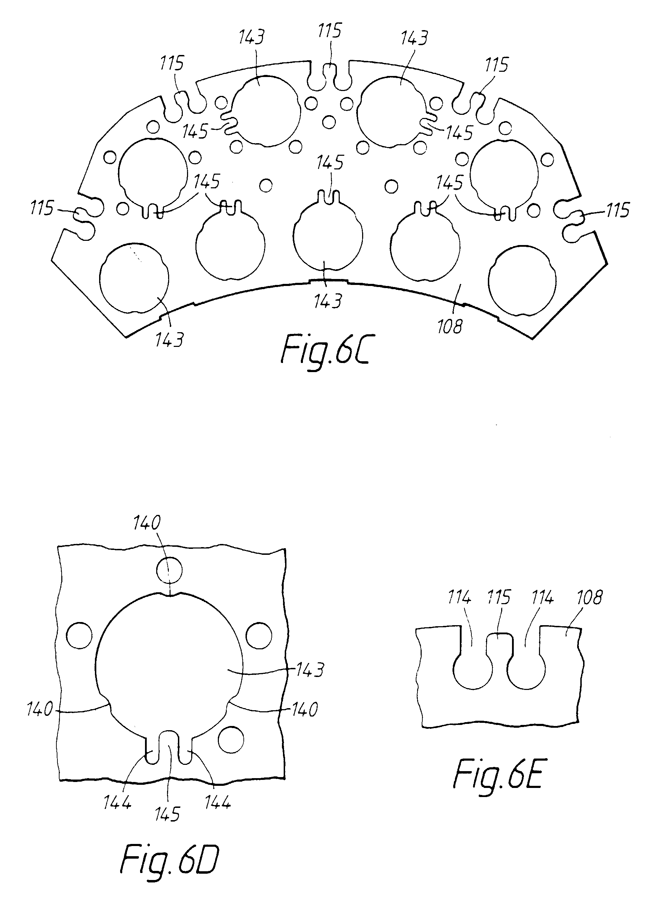

The heat exchanger is of annular form enclosing a central combustion chamber wherein a cylindrical burner 10 is disposed. The outer contour of the heat exchanger is defined by the fins and end plates (see Figure 3) is generally circular with flat sides allowing the heat exchanger to be housed in a substantially square casing whereby corner spaces are defined within the casing to form flue ducts extending along the heat exchanger and into which the flue gas passes by flowing between the fins 8 from the combustion chamber. On passing through the fin interspaces, the flue gases give up their heat and become cooled. The heat transfer efficiency is such that the flue gases can at least under some operating conditions be reduced in temperature to below the dew point and moisture then condenses out on the surfaces of the fins. As the temperature of the fins will be lowest adjacent their outer edges, due to the outer tubes carrying the coolest water, condensate is most likely to be formed on the outer portions of the fins and around the outer tubes 1. To prevent the condensate accumulating on the fin surfaces and forming a film or layer of water thereon, which would act as a thermal insulator and hence reduce the efficiency of the heat exchange with the flue gases, means are provided in association with the fins to facilitate rapid removal of condensate to the lower region of the heat exchanger below the inter-fin flue gas passages. This means may take different specific forms. In Figures 4A and 4B there is shown an embodiment of a heat exchanger segment in which several rods 12 are arranged to extend vertically through aligned holes in the fins 8. The rods 12 extend continuously at least from the uppermost fin to below the lowermost fin. The rods contact the fins but do not fill the cross-section of the holes in the fins so that gaps are left through which water drops can pass. Under normal surface tension effects, the condensate collecting on the upper surface of a fin will be drawn towards a rod adjacent to which a liquid drop will form until it is large enough to run down along the rod under its own weight due to gravity. As clearly shown in Figure 4B, the rods are disposed in clusters of four around the outer water tubes 1, and three additional rods are located at intermediate positions spaced at greater distances from the water tubes. All the rods are positioned between the inner water tubes and the outer edge of the fins. (In the interest of clarity only two water tubes have been included in Figure 4A, which also applies to Figures 5A and 6A).

In the embodiment shown in Figures 5A and 5B, instead of solid rods elongate wicks 13 are arranged to extend longitudinally of the heat exchanger. Although the wicks could be located as described above in relation to the rods, there are shown two wicks positioned at the outer peripheral edge of the fins. The wicks are inserted into slots 14 which may be conveniently provided at the time of pressing the metal fins. The wicks, due to their natural absorbency and ability to conduct liquid provide an effective means of removing condensate from the fin surfaces. Of course, it is not necessary for a single pair of adjacent wicks to be provided in each heat exchanger segment and additional wicks could for example be inserted in any one or more of the further slots 14 shown formed in the fins in Figure 5B.

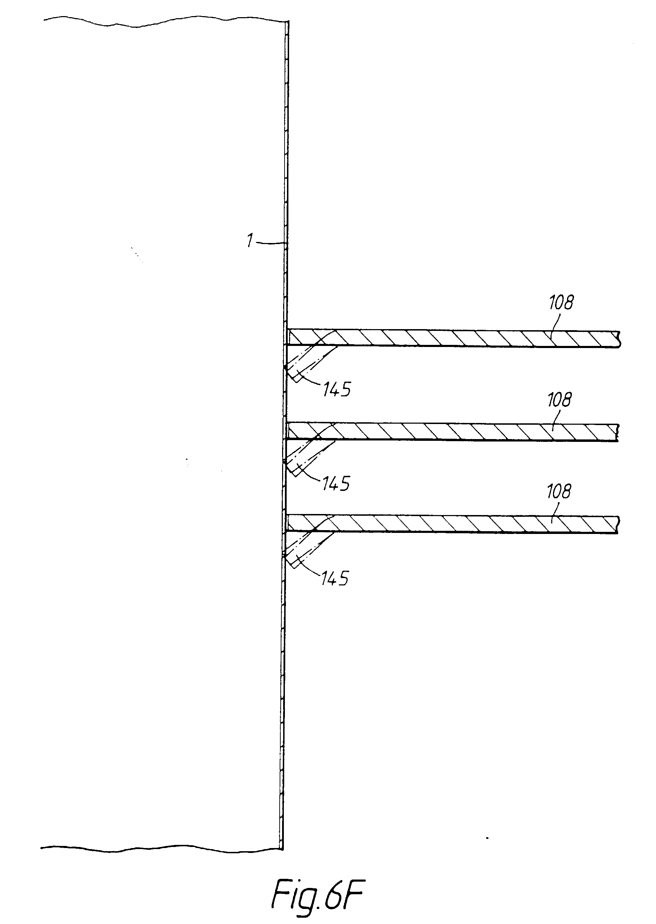

The fins in the embodiment of Figures 6A and 6B are provided with tabs 15 at the outer edges, these tabs being conveniently formed by slots 14 produced at the time of manufacture of the fins by pressing from metal sheet. The corresponding tabs of all the fins are bent downwardly, so that the deflected tabs define a flow path for water condensing on the fin surfaces. The water is drawn by surface tension towards the tabs and runs down the continuous flow path defined by the tabs. Each tab may be deflected so that it contacts the next tab below, but this is not essential since if gaps are left it merely means that drops of water will collect at the extremities of the tabs and then fall away when they have grown large enough for their weight to overcome the surface tension forces. The fins are shown provided with additional tabs 16 located adjacent those radially outer tubes 1 which carry the cooler water during its passage through the heat exchanger. Illustrated in Figure 6C is a modified fin plate 108 formed with a a plurality of tabs 115 at its outer edge. At least one and preferably all of these tabs are deflected downwardly in the assembled heat exchanger so that the aligned deflected tabs define a drainage path for conducting condensate to the lower part of the heat exchanger. As shown in Figure 6E, each tab 115 is defined by a pair of adjacent notches 114 shaped as a circular hole connected to the fin edge by a slot of width less than the hole diameter so that the tab has a waisted neck portion, which may assist in drawing water onto the tab. Around the periphery of each water tube hole 143 are small protrusions 140 for providing a loose interference fit between the fin plate and the tube. Furthermore, additional condensate drainage tabs 145 are provided at the periphery of at least some of the holes. As shown all the holes for the outer tubes, and the holes for the three medial inner tubes are equipped with additional tabs 145. Each tab is defined by a pair of parallel slots 144 and is formed with such a length that its free end projects into the tube hole so that when the tube 1 is inserted, the tab is deflected downwardly and rests with its free end abutting the tube surface as shown in Figure 6F. Consequently, these downwardly deflected tabs 145 combine with the tubes 1 to define drainage paths for conducting condensate from the fins to the lower region of the heat exchanger. It will be noted that the tabs 145 associated with the outer tubes are positioned so that they are distributed over an outer portion of the fin plate, and the tabs 145 associated with the inner tubes are located at the outer, i.e. cooler, side of these tubes.

It should be understood that the embodiments of Figures 4 to 6 would be combined in the same heat exchanger. For example, the fins illustrated in Figure 6B or 6C could have one or more rods inserted through the holes shown, and/or one or more wicks could be inserted in the slots 14 or 114 flanking tabs 15 or 115 which have not been downwardly deflected. Of course, additional ones of the tabs not shown bent downwardly in Figure 6B could be deflected to form flow paths for condensate removal and preferably all the tabs are bent down to achieve maximum drainage.

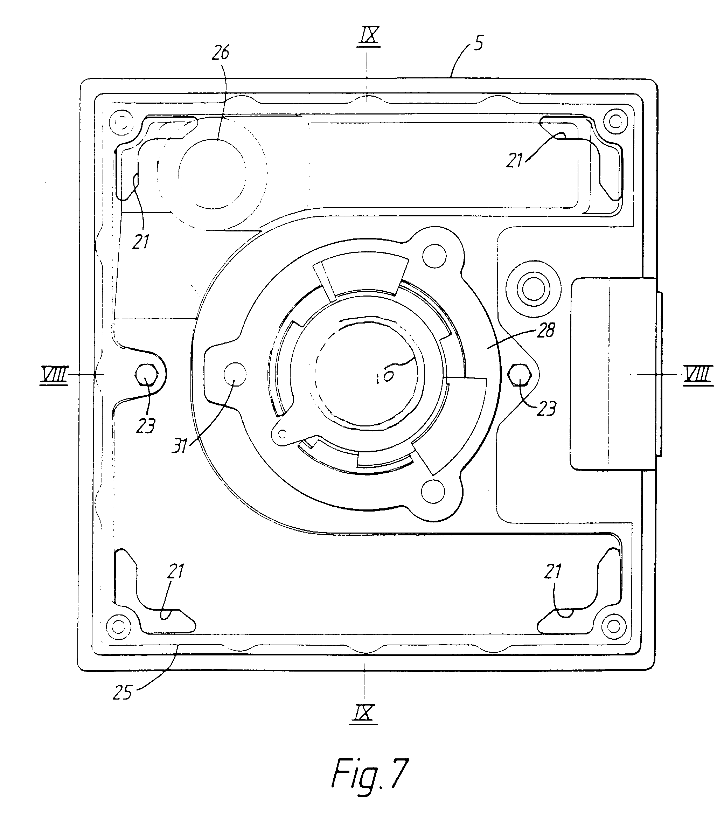

When the condensate reaches the lower end of the heat exchanger it collects on the upper surface of the lower header 5 which has a rim 20 extending around its periphery to prevent condensate flowing in uncontrolled manner over the edge of the header. In the corner regions, radially outside of the tubes 1 and fins 8 and at the lower ends of the corner flue ducts mentioned above, the header 5 is formed with through holes 21 which serve as drain outlets for the condensate water. The lower tube plate 3 is provided with an upwardly directed lip 19 at its inner edge so that condensate will rim off the upper surface of this tube plate in the direction of its outer edges and hence generally towards the drain holes 21. Firmly fixed to the underside of the header 5 by bolts 23, and sealed to the header by an intervening gasket 24 is a sump 25. (In Figure 7 the underside of the header 5 is shown with the sump 25 superimposed thereon.) The sump is generally of a U-shape to extend around three sides of the header 5, but to cover all four drain holes 21 of the header. The sump defines a chamber for collection of condensate draining through the holes 21, and for discharging the collected condensate it is formed with a downwardly opening outlet 26.

Mounted to the underside of the sump 25 and sealed to it by an 0-ring seal 27 is a central base plate 28 mounting the burner 10. This burner mounting plate has an upstanding central boss 29 which serves to locate the burner, and which also defines an inner wall of an annular overflow chamber 30, the outer and bottom walls of which are respectively formed by the header 5 and a flange portion of the base plate. The burner is shown fitted within the boss 29, but it can instead fit over the outside of the boss. It is not essential for the burner mounting plate to include the central boss and in a modified construction the burner is connected to the upper face of the burning mounting plate by a flange ring and a lower end part of the burner defines the inner wall of the overflow chamber. Supported by the base plate and extending upwardly through the overflow chamber 30 is a flame sensor probe 31, which also serves as a condensate level sensor. The upper tip portion of the probe is located alongside the burner for detecting the presence of a flame, the probe being connected electrically to the boiler controls as well known in the art.

At a certain location the gasket 24 is interrupted to define between the sump chamber and the overflow chamber 30 an overflow channel 32. Should the interior of the sump chamber become filled with water, such as due to a blockage in the drain passage through which water normally passes from the sump, further flow of condensate into the sump from the heat exchanger results in water entering the overflow chamber 30 via the channel 32. When the water reaches a certain level in this overflow chamber it is detected by the probe 31 which provides a signal to the boiler controls indicating a malfunction so that the boiler will be shut down. When the fault has been rectified and water starts to drain away from the sump again, the water in the overflow chamber passes back into the sump chamber through the connecting channel 32. In order to minimise the loss of hot flue gas from the combustion chamber by flowing out through the water drain via the channel 32, it is preferable for this channel to have a restricted through flow area.

From the foregoing description it will be understood that the heat exchanger assembly of the invention provides effective means for removing condensate water, with adequate safeguards in the event of a drain malfunction, and thereby allows the heat exchanger to be operated effectively and very efficiently in a condensing mode. The use of a common probe for flame detection and detection of condensate in the overflow chamber simplifies the construction and reduces manufacturing costs, the use of a common probe being made possible by the arrangement of the overflow chamber adjacent the burner.

## Claims

1. A heat exchanger for a condensing boiler comprising a plurality of generally upright tubes (1) for conducting liquid through a heat exchanger, and substantially horizontal fins (8) attached to the tubes, characterised in that means (12;13;15) connected to the fins extend downwardly therefrom to define a predetermined drainage path for condensate formed on the fins.

2. A heat exchanger according to claims 1, wherein said means comprise one or more continuous elongate members (12;13) extending generally in the direction of the tubes.

3. A heat exchanger according to claims 2, wherein the elongate members comprise at least one rod (12) passing through aligned holes in the fins and in contact with the fins at the edges of the holes.

4. A heat exchanger according to claims 2 or 3, wherein the elongate members comprise at least one wick.

5. A heat exchanger according to any one of claims 1 to 4, wherein said means comprise tabs (15;16;115;145) defined by the fins and deflected out of the planes thereof for aligned tabs of adjacent fins to define a drainage path.

6. A heat exchanger according to claim 5, wherein each tab (15;16;115;145) is defined by a pair of slots (14;114;144).

7. A heat exchanger according to claims 5 or 6, wherein the fins have at least one tab at their outer edges.

8. A heat exchanger according to claim 5, 6 or 7, wherein the fins have at least one tab (16;145) formed at the edge of a hole (143) through which a tube (1) passes.

9. A heat exchanger according to claim 8, wherein said at least one tab (16;145) is formed to project into the hole (143) and is deflect by insertion of the tube (1) through the hole (143).

10. A heat exchanger according to any one of the preceding claims comprising upper and lower headers (4,5) between which the tubes extend, the headers enclosing chambers for conducting liquid to and from the tubes, wherein a sump chamber for collection of condensate is defined below the lower header (5), and the upper surface of the lower header (5) is arrange to collect condensate and to deliver condensate into the sump chamber.

11. A heat exchanger according to claim 10, wherein the lower header (5) has a hole (21) through which condensate collected by the header drains into the sump chamber.

12. A heat exchanger according to claim 11, wherein the lower header (5) is of substantially rectangular configuration and has a drain hole (21) located in the region of one or more corners thereof.

13. A heat exchanger according to claim 10, 11 or 12, wherein the lower header (3) has an upstanding rim (20) extending around the periphery of the upper surface thereof.

14. A heat exchanger according to any one of claims 10 to 13, wherein the tubes (1) are arranged in an annular array around a central combustion chamber and are mounted to the lower header (5) by an annular tube plate (3), and said tube plate has an upwardly directed lip (19) adjacent the inner edge thereof so that condensate will run off the tube plate onto the lower header at the outer edge of the tube plate.

15. A heat exchanger according to any one of claims 10 to 14, wherein the sump chamber is defined by a sump member (25) fastened to the underside of the lower header (5).

16. A heat exchanger according to any one of claims 10 to 15, wherein the sump member (25) is generally U-shaped to facilitate mounting of a gas burner (10) generally centrally through the sump.

17. A heat exchanger according to claim 16, wherein the burner (10)is carried by a mounting plate (28) secured to the underside of the sump member (25).
